# EUROPEAN PATENT SPECIFICATION

(11) **EP 4 189 168 B1**
(45) Date of publication and mention of the grant of the patent: **14.08.2024**
(21) Application number: 21737821.5
(22) Date of filing: 06.07.2021
(51) Int. Cl.: E02B 3/24

(54) **BOLLARD**
POLLER
BITTE D'AMARRAGE

(30) Priority: 28.07.2020 NL 2026151
(43) Date of publication of application: 07.06.2023
(73) Proprietor: Machinefabriek L. Straatman B.V., 3336 LE Zwijndrecht (NL)
(72) Inventor: STRIETMAN, Gertjan, 3336 LE Zwijndrecht (NL); VAN DER LAAN, Markus, 3336 LE Zwijndrecht (NL); BURGERS, Joppe Jort, 3336 LE Zwijndrecht (NL)
(74) Representative: van Breda, Jacobus
(86) International application number: PCT/NL2021/050429
(87) International publication number: WO 2022/025757

(56) References cited:
- WO-A1-2020/045756
- CN-U- 203 320 483
- GB-A- 2 543 114
- IT-A1- UA20 164 381

## Description

The invention relates to a bollard comprising a foot plate with a bollard pipe placed thereon and a bollard head placed on the bollard pipe.

Such a bollard is known from practice. Ships are moored to mooring bollards in harbours with mooring lines, further indicated here as bollard. The bollards are on the quay and are firmly anchored in a concrete foundation by means of a number of bolts. Each bollard is suitable for laying several trusses of one or more ships at the same time.

The bollard known from practice comprises a horizontal foot plate provided with a number of vertical bolt holes, mounted thereon a vertical bollard pipe with a bollard head on top. The rope eye of the mooring line is laid over the vertical bollard pipe. To prevent it from sliding upwards, the bollard head is provided with one or more horizontal ears.

Bollards are usually provided with a code that indicates the tensile force that the bollard can withstand, whereby a certain safety factor is used. It is assumed here that the rope slides up to the bollard head and exerts a force on the bollard in both the horizontal and vertical planes. However, the actual tensile force on the bollard is not known, because it is not measured. There is also no direct insight into the interplay of forces of the ship and how this is further guided by means of the various mooring lines to the separate bollards on which the mooring lines are fitted. Because these forces are not accurately known, this can lead to damage/breakage of the mooring line and in a number of cases even damage/breakage of the bollard. An additional complication is that the damage/breakage of the truss and bollard can mainly be the result of a cumulatively built-up fatigue of the materials used.

Due to an increase in ship sizes, changes in the mooring gear and increasing requirements for operational reliability and quality standards, port authorities want to gain more insight into the play of forces on the bollards and, in particular, whether the forces take on such magnitude that this can be harmful to operational reliability.

In order to gain more insight into the interplay of forces on the bollard, a number of possible solutions have been proposed aimed at directly measuring forces on the bollard by means of:
1) Strain gauges on the bollard surface to directly measure the deformation by means of resistance in electrical gauges.
2) Strain gauges on the foundation bolts to measure the tensile force in the bolts.
3) Pressure sensors on the contact surface of the cable to measure the cable clamping force.

Although strain gauges and pressure sensors are known in the art, their application to bollards presents a number of specific problems:
- The deformations in the steel construction are (very) small, which means that (very) accurate, expensive and vulnerable strain gauges are required.
- Measuring strain gauges in one direction and the combination of mooring forces in various directions results in complex deformations and stresses in the bollard material, making it difficult to trace the measurements back to the actual mooring force and direction.
- The same problem occurs when the deformations in the bolts are measured, because the interplay of forces occurs primarily in the horizontal direction and the bolts are primarily oriented vertically.
- The bollard deforms slightly under the influence of temperature (and sunlight) and thus the calibration of the strain gauges is lost.
- Pressure sensors are subject to wear and will only work if the cable exerts a specific force on the surface in question.
- When replacing the bollard, significant parts of the measuring system must also be replaced and/or recalibrated.
- Bollards are often subject to strong vibrations, causing damage to the installed measuring equipment.

The object of the invention is to counteract these problems.

From WO2020/045756, that is considered to form the closest prior art, a bollard is known which has a foot plate with a bollard pipe placed thereon and a bollard head, wherein the bollard head carries a measuring instrument which is designed for determining the status of the bollard.

According to the invention, a bollard is proposed in which a measuring support is positioned in the bollard pipe, which measuring support carries a measuring instrument which is adapted to determine the position of the bollard head and/or position determination of an area of the bollard pipe below the bollard head at a height from the foot plate that is at least 80% of the distance between the foot plate and the bollard head is, which measuring support has a foundation which is separate from the foot plate.

The force of the mooring line is transferred to the bollard pipe, resulting in a deformation of the bollard relative to the foundation. The greatest deformation occurs in the upper part of the bollard pipe and the bollard head attached to it. The measuring support is positioned in the bollard pipe, but without a mechanical connection between the two parts, so that the external truss force and the deformation of the bollard pipe do not affect the deformation of the measuring support. As a result, there is no or minimal deformation of the measuring support and the measuring system on top of the measuring support can accurately register the deformation of the deforming bollard head. The force of the mooring line results in the deformation of the bollard head, the bollard pipe and to a (very) small extent also of the foot plate. This slight deformation of the base plate also leads to minor deformation of the underside of the measuring support, however, due to the length of the measuring support, the small deformation at the bottom can take on greater values at the top of the measuring support, making the measurement more inaccurate. By using a separate foundation of the bollard's foot plate, the deformations in the measuring support are minimized.

It is preferred that the foundation of the measuring support is located under the base plate. The force of the mooring line results in deformations of the bollard which decrease strongly in the direction of the footplate. By placing the foundation of the measuring support under the base plate, the deformations are reduced even further and an even more accurate measurement can be realised.

It is further advantageous that the base plate is of corrugated design. Under the influence of the mooring line, the bollard deforms and the displacements at the top can be measured. Providing the footplate with an undulating shape increases the flexibility of the entire bollard construction, so that greater deformations occur when forces remain the same. This makes it possible to use less accurate sensors, or to measure more accurately with the same sensors. The wave shape in the footplate also increases the tilt of the bollard pipe, increasing the displacements on top of the bollard pipe due to the greater hinge/arm action.

It is also advantageous that the bollard head has an access opening for the measuring instrument. The measuring instrument is arranged on top of the measuring support in the bollard pipe. It is desirable to have access to this measuring instrument for calibration, inspection and maintenance. This is provided by providing an access opening in the bollard head.

It is further preferred that the measuring instrument is adapted to measure displacements in three orthogonal directions. For measuring and analyzing the complex interplay of forces on a bollard it is desirable to measure individual displacements in orthogonal directions. These can then be traced back to the occurring forces and the consequences for the reliability of the construction estimated.

The invention will be further elucidated below with reference to the following figures, in which:
- Fig. 1: shows a prior art bollard in 3D view;
- Fig. 2: a bollard according to the present invention, also shown in 3D view;
- Fig. 3: shows a bollard according to the invention in cross-section; and
- fig. 4A and 4B: showing detailed sectional and 3D views of the measuring instrument on top of the measuring support.

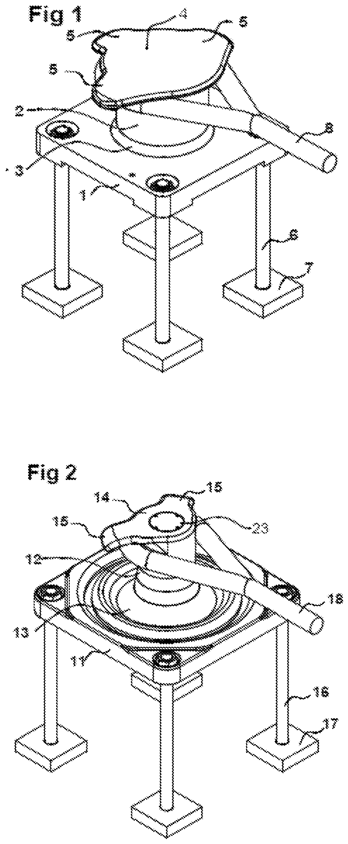

Fig. 1 shows a standard mooring bollard with footplate 1, bollard pipe 2, shape 3 as connecting part between footplate and bollard pipe, bollard head 4, three bollard ears 5, four fastening bolts 6, each provided with a separate anchor plate 7. The ship pulls by means of the mooring rope 8 the bollard.

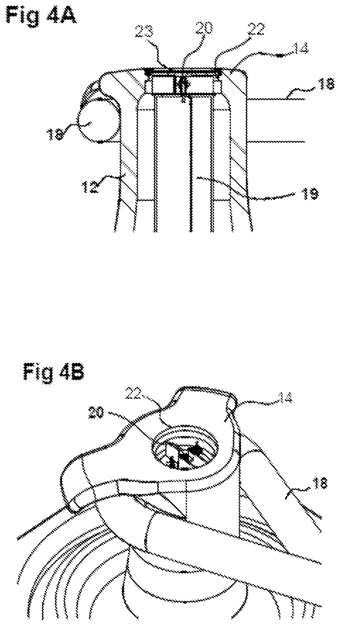

Fig. 2 shows the bollard according to the invention with footplate 11, bollard pipe 12, adapter shape 13 as connecting part between footplate and bollard pipe, bollard head 14, two bollard ears 15, four fastening bolts 16, each provided with a separate anchor plate 17. The ship pulls through the mooring line 18 on the bollard. An access opening 22 (see figures 4A and 4B) with cover 23 is arranged on top of the bollard head.

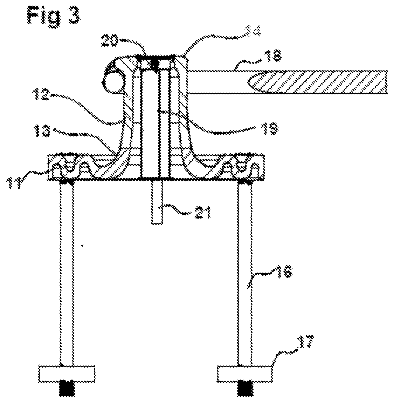

Fig. 3 shows the bollard with base plate 11 provided with a corrugation, bollard pipe 12, transition shape 13, bollard head 14, fixing bolt 16, anchor plate 17, mooring toss 18, measuring support 19 in the bollard pipe, with the measuring instrument 20 on top and the measuring support foundation 21 at the bottom.

Fig. 4A shows the bollard head 14, the mooring line 18, the measuring support 19 and on top of that the measuring instrument 20, and an access opening 22 closed by a cover 23. The measuring support continues until just below the bollard head 14, where the greatest deformations occur.

Fig. 4B shows the bollard head 14, the mooring line 18, the measuring instrument 20, the access opening 22, with the cover 23 removed. By means of the access opening 22 there is direct access to the measuring instrument placed on top of the measuring support. The access opening 22 is sized to allow the complete measuring instrument to be disassembled without the need to remove the heavy and massive bollard.

It is usual for the bollard to be installed on a quay, but the bollard can also be used at other locations, both on fixed and floating maritime objects.

The bollard can have the following dimensions for the foot plate 600-1200 mm square, for the interplay of forces 50-300 tonf and corresponding deformations of 1-5 mm.

### Numbering

Prior art bollard shown in Figure 1.
- 1: Foot plate
- 2: Bollard Pipe
- 3: Transition shape
- 4: Bollard Head
- 5: Bolderear / Ear
- 6: Fixing bolt

- 7: Anchor plate
- 8: Mooring line

Bollard according to the invention, see figures 2, 3, 4A and 4B
- 11: Foot plate
- 12: Bollard Pipe
- 13: Transition Shape
- 14: Bollard Head
- 15: Bolderear / Ear
- 16: Fixing bolt
- 17: Anchor plate
- 18: Truss
- 19: Measuring support
- 20: Measuring instrument
- 21: Measuring support foundation
- 22: Access opening
- 23: Access opening cover

Although the invention has been discussed in the foregoing with reference to an exemplary embodiment of the bollard of the invention, the invention is not restricted to this particular embodiment which can be varied in many ways without departing from the invention. The discussed exemplary embodiment shall therefore not be used to construe the appended claims strictly in accordance therewith. On the contrary the embodiment is merely intended to explain the wording of the appended claims without intent to limit the claims to this exemplary embodiment. The scope of protection of the invention shall therefore be construed in accordance with the appended claims only

## Claims

1. A bollard comprising a foot plate (11) with a bollard pipe (12) placed thereon and a bollard head (14) placed on the bollard pipe (12), wherein a measuring support (19) is positioned in the bollard pipe (12), said measuring support (19) carrying a measuring instrument (20) adapted for position determination of the bollard head (14) and/or position determination of an area of the bollard pipe (12) below the bollard head (14) at a height from the foot plate (11) which is at least 80% of the distance between the foot plate (11) and the bollard head (14) wherein the measuring support (19) has a foundation separated from the foot plate (11).

2. Bollard according to claim 1, wherein the foundation of the measuring support (19) is located below the foot plate (11).

3. Bollard according to claim 1 or 2, wherein the base plate (11) is corrugated.

4. Bollard according to one of the preceding claims 1 - 3, wherein the bollard head (14) has an access opening for the measuring instrument (20).

5. Bollard according to any one of the preceding claims 1 - 4, wherein the measuring instrument (20) is adapted to measure displacements in three orthogonal directions.

## Patentansprüche

1. Poller aufweisend eine Fußplatte (11) mit einer darauf angeordneten Pollerröhre (12) und einem auf der Pollerröhre (12) angeordneten Pollerkopf (14), wobei eine Messstütze (19) in der Pollerröhre (12) angeordnet ist, wobei die Messstütze (19) in einer Höhe von der Fußplatte (11) aus, welche mindestens 80% des Abstands zwischen der Fußplatte (11) und dem Pollerkopf (14) beträgt, ein Messinstrument (20) trägt, welches dazu ausgebildet ist, eine Position des Pollerkopfs (14) zu bestimmen und/oder eine Position eines Abschnitts der Pollerröhre (12) unter dem Pollerkopf (14) zu bestimmen, wobei die Messstütze (19) einen von der Fußplatte (11) abgetrennten Unterbau aufweist.

2. Poller nach Anspruch 1, wobei der Unterbau der Messstütze (19) unterhalb der Fußplatte (11) angeordnet ist.

3. Poller nach Anspruch 1 oder 2, wobei die Grundplatte (11) gewellt ausgebildet ist.

4. Poller nach einem der vorhergehenden Ansprüche 1 - 3, wobei der Pollerkopf (14) eine Zugangsöffnung für das Messinstrument (20) aufweist.

5. Polle nach einem der vorhergehenden Ansprüche 1 - 4, wobei das Messinstrument (20) dazu ausgebildet ist, Verschiebungen in drei orthogonalen Richtungen zu messen.

## Revendications

1. Bollard comprenant une plaque de base (11) avec un tube de bollard (12) placé sur celle-ci et une tête de bollard (14) placée sur le tube de bollard (12), dans lequel un support de mesure (19) est positionné dans le tube de bollard (12), ledit support de mesure (19) portant un instrument de mesure (20) adapté pour une détermination de position de la tête de bollard (14) et/ou une détermination de position d'une zone du tube de bollard (12) au-dessous de la tête de bollard (14) à une hauteur à partir de la plaque de base (11) égale à au moins 80 % de la distance entre la plaque de base (11) et la tête de bollard (14), dans lequel le support de mesure (19) comporte une fondation séparée de la plaque de base (11).

2. Bollard selon la revendication 1, dans lequel la fondation du support de mesure (19) est située au-dessous de la plaque de base (11).

3. Bollard selon la revendication 1 ou 2, dans lequel la plaque de base (11) est ondulée.

4. Bollard selon l'une des revendications 1 à 3, dans lequel la tête de bollard (14) comporte une ouverture d'accès pour l'instrument de mesure (20).

5. Bollard selon l'une quelconque des revendications 1 à 4, dans lequel l'instrument de mesure (20) est adapté pour mesurer des déplacements dans trois directions orthogonales.
